# EUROPÄISCHE PATENTSCHRIFT

(11) **EP 3 393 210 B1**
(45) Veröffentlichungstag und Bekanntmachung des Hinweises auf die Patenterteilung: **31.07.2019**
(21) Anmeldenummer: 18168205.5
(22) Anmeldetag: 19.04.2018
(51) Int. Cl.: H05B 33/08

(54) **SCHALTUNGSANORDNUNG ZUM BETREIBEN VON LEUCHTMITTELN**
SWITCHING ASSEMBLY FOR OPERATING LIGHTS
CIRCUITERIE DESTINÉE AU FONCTIONNEMENT D'ÉCLAIRAGES

(30) Priorität: 20.04.2017 DE 202017102336 U
(43) Veröffentlichungstag der Anmeldung: 24.10.2018
(73) Patentinhaber: Zumtobel Lighting GmbH, 6850 Dornbirn (AT)
(72) Erfinder: Gajdos, David, 6850 Dornbirn (AT); Steffens, Thomas, 88161 Lindenberg im Allgäu (DE)
(74) Vertreter: Thun, Clemens

(56) Entgegenhaltungen:
- WO-A1-2013/037155
- DE-A1-102015 112 058
- US-A1- 2013 257 272

## Beschreibung

Die vorliegende Erfindung betrifft eine Schaltungsanordnung, welche zum Betreiben von Leuchtmitteln, insbesondere zum Betreiben von LEDs, vorgesehen ist, wobei die Schaltungsanordnung eine steuerbare Konstantstromquelle umfasst.

Zum effizienten Betreiben von Leuchtmitteln auf Halbleiterbasis ist es in der Regel erforderlich, diese mit einem an die Leuchtmittel entsprechend angepassten Strom zu versorgen. Die Höhe des Stroms ist hierbei derart gewählt, dass die Umsetzung der zugeführten elektrischen Leistung in Licht mit größtmöglicher Effizienz erfolgen kann. In der Praxis kommen hierfür sogenannte Konstantstromquellen zum Einsatz, die beispielsweise der LED-Anordnung in Serie nachgeschaltet sind und sicherstellen, dass der vorgegebene Stromfluss durch die LEDs dauerhaft beibehalten wird.

Selbstverständlich hängt die Höhe des erforderlichen Stroms von der Art, der Anzahl und/oder der Verschaltung der zum Einsatz kommenden Leuchtmittel ab. Je nach spezieller Ausgestaltung der zu betreibenden Leuchtmittel-Anordnung muss also die Konstantstromquelle in der Lage sein, den hierfür optimal geeigneten Strom zur Verfügung zu stellen. Dieses Erfordernis betrifft allerdings nicht nur Schaltungsvarianten, bei denen dauerhaft eine bestimmte Leuchtmittel-Konfiguration gleichbleibend betrieben werden soll. Es sind nämlich aus dem Stand der Technik auch Lösungen bekannt, bei denen die zum Einsatz kommenden LEDs zeitveränderlich miteinander verschaltet werden. In diesem Zusammenhang ist beispielsweise bekannt, abhängig von der Höhe einer zur Verfügung stehenden Versorgungsspannung die Anzahl der seriell und/oder parallel miteinander verschalteten LEDs variabel anzupassen. Insbesondere in diesem Fall muss dies durch die Konstantstromquelle berücksichtigt werden, die dann also während des laufenden Betriebs jeweils einen geeigneten Stromfluss sicherstellt.

Variable Konstantstromquellen sind aus dem Stand der Technik durchaus bekannt. Diese erzeugen abhängig von einer Eingangsinformation einen gewünschten Versorgungstrom für beispielsweise eine mit der Konstantstromquelle verbundene LED-Anordnung. Diese Eingangsinformation für eine derartige variable Konstantstromquelle wird hierbei in der Regel durch einen mit der Konstantstromquelle verbundenen Widerstand zur Verfügung gestellt, dessen Widerstandswert die Höhe des durch die Konstantstromquelle eingestellten Stroms definiert.

Bei statischen Lösungen, bei denen also während des laufenden Betriebs der Stromfluss unverändert bleiben soll, kann der durch die Konstantstromquelle eingestellte Stromfluss durch das eingangsseitige Anschließen eines geeigneten Widerstands dauerhaft festgelegt werden. Soll allerdings während des laufenden Betriebs die Höhe des Stroms durch die steuerbare Konstantstromquelle angepasst werden, so muss in diesem Fall dann auch der eingangsseitig angeschlossene Widerstand zeitveränderlich gestaltet sein. Hierfür sind zwar sogenannte digitale Potentiometer bekannt, welche über ein digitales Eingangssignal angesteuert werden und dann einen entsprechend veränderbaren Widerstand erzeugen. Eine derartige Vorgehensweise führt dann allerdings zu einem erhöhten Aufwand, da zusätzlich eine Steuereinheit beziehungsweise Intelligenz vorhanden sein muss, welche das digitale Potentiometer ansteuert. Weiterhin muss dann das digitale Eingangssignal durch das Potentiometer erst in entsprechender Weise umgesetzt werden, was dazu führt, dass sich die Reaktionszeiten hinsichtlich der Anpassung des gewünschten Stroms beispielsweise für eine LED-Anordnung

Dokument DE102015112058A1 offenbart eine Schaltung nach der Präambel des Anspruchs 1.

Der vorliegenden Erfindung liegt deshalb die Aufgabenstellung zu Grunde, eine verbesserte Möglichkeit zur Ansteuerung einer steuerbaren Konstantstromquelle zur Verfügung zu stellen, durch welche das Verhalten einer Schaltungsanordnung zum Betreiben von LEDs insgesamt verbessert werden kann.

Die Aufgabe wird durch eine Schaltungsanordnung, welche die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf dem Gedanken, auf das zuvor erwähnte digitale Potentiometer zu verzichten und stattdessen die ohnehin zum Betreiben der Schaltungsanordnung erforderliche Intelligenz zum Ansteuern der Konstantstromquelle zu nutzen. Diesbezüglich wird der Umstand genutzt, dass zur Steuerung derartiger Schaltungsanordnungen in der Regel Mikrocontroller eingesetzt werden, die oftmals eine digital-zu-analog-Funktionalität bieten. Das heißt, die Mikrocontroller können abhängig von einem digitalen Sollwert ein analoges Spannungssignal ausgeben, wobei die Erzeugung des analogen Spannungssignals auf der Nutzung eines in den Mikrocontroller integrierten Spannungsteilers beruht. Die Komponenten dieses Spannungsteilers werden nunmehr erfindungsgemäß als interner variabler Widerstand genutzt, wobei der Steueranschluss der Konstantstromquelle an den sog. DAC-Anschluss des Mikrocontrollers derart angeschlossen wird, dass die internen Spannungsteilerkomponenten des Mikrocontrollers Bestandteil des zum Steuern der Konstantstromquelle genutzten Widerstand sind.

Erfindungsgemäß wird also eine Schaltungsanordnung zum Betreiben von Leuchtmitteln vorgeschlagen, welche eine steuerbare Konstantstromquelle aufweist, die abhängig von einem an einen Steueranschluss der Konstantstromquelle angeschlossenen Widerstand einen zum Betreiben der Leuchtmittel vorgesehenen Strom ausgibt, wobei die Schaltungsanordnung weiterhin einen Mikrocontroller mit digital-zu-analog-Funktionalität aufweist und der Steueranschluss der Konstantstromquelle an einen DAC-Anschluss des Mikrocontrollers angeschlossen ist, derart, dass interne Spannungsteilerkomponenten des Mikrocontrollers einen internen Widerstand bilden, der Bestandteil des zum Steuern der Konstantstromquelle genutzten Widerstands ist.

Die erfindungsgemäße Lösung gestattet es nicht nur, eine steuerbare Konstantstromquelle variabel anzusteuern und hierbei auf den Einsatz eines digitalen Potentiometers kostensparend zu verzichten. Darüber hinaus wird auch das Verhalten der Anordnung insgesamt verbessert, da das nun nicht mehr vorhandene digitale Potentiometer auch nicht zu Zeitverzögerungen hinsichtlich der Ansteuerung der Konstantstromquelle führen kann. Stattdessen wird die zum Ansteuern der Konstantstromquelle erforderliche Information unmittelbar innerhalb des Mikrocontrollers erzeugt und durch diesen entsprechend sofort ausgegeben, sodass eine nahezu verzögerungsfreie Ansteuerung der Konstantstromquelle vorgenommen werden kann.

Die in dem Mikrocontroller vorgesehenen Spannungsteilerkomponenten erlauben es üblicherweise, einen variablen Widerstand innerhalb eines bestimmten vorgegebenen Bereichs zu generieren. Dabei kann durchaus der Fall auftreten, dass dieser Bereich nicht vollständig mit dem Ansteuerbereich für die steuerbare Konstantstromquelle übereinstimmt. In diesem Fall ist dann gemäß einer vorteilhaften Weiterbildung der Erfindung vorgesehen, dass durch optionale zusätzliche, nunmehr allerdings konstante Widerstände der letztendlich am Steueranschluss der Konstantstromquelle anliegende Widerstand den vollen Bereich abdeckt. Hierfür kann beispielsweise vorgesehen sein, dass zwischen dem DAC-Ausgang des Mikrocontrollers und dem Steuereingang der Konstantstromquelle ein konstanter Widerstand in Serie geschaltet ist. Ferner kann optional vorgesehen sein, dass zwischen dem DAC-Ausgang und dem Steuergang ein konstanter Widerstand angeschlossen ist, der parallel zu den Spannungsteilerkomponenten des Mikrocontrollers, die Bestandteil des zum Steuern der Konstantstromquelle genutzten Widerstands sind, geschaltet ist. Wie bereits erwähnt handelt es sich in beiden Fällen dann um konstante Widerstände, die einmalig vorgegeben sein müssen und das variable Ansteuern der Konstantstromquelle durch den Mikrocontroller mit hoher Effizienz ermöglichen.

Dabei kann vorzugsweise vorgesehen sein, dass der von dem Mikrocontroller eingestellte Widerstand und damit der durch die Konstantstromquelle erzeugte Stromfluss abhängig von der Konfiguration der zu betreibenden Leuchtmittel gewählt wird. Hierbei kann insbesondere vorgesehen sein, dass die Einstellung des Widerstandwerts zeitvariabel vorgenommen wird, beispielsweise abhängig von dem aktuellen Spannungswert einer zugeführten Versorgungsspannung gewählt wird. Hierfür kann die Schaltungsanordnung entsprechend geeignete Mittel zum Erkennen der anzusteuernden Leuchtmittel-Anordnung und/oder zum Erfassen des aktuellen Spannungswerts einer zugeführten Versorgungsspannung aufweisen. Ferner kann vorgesehen sein, dass der Mikrocontroller selbst abhängig von der Versorgungsspannung die Verschaltung der zu betreibenden Leuchtmittel anpasst.

Letztendlich wird also mit der erfindungsgemäßen Lösung ein einfaches aber äußerst effizientes Ansteuern einer steuerbaren Konstantstromquelle ermöglicht, wodurch das Betreiben von Leuchtmitteln weiter optimiert werden kann.

Nachfolgend soll die Erfindung an Hand der beiliegenden Zeichnung näher erläutert werden. Es zeigen:
- Figur 1: eine schematische Darstellung des grundsätzlichen Gedankens der vorliegenden Erfindung und
- Figur 2: eine detaillierte Ansicht zur Erläuterung des erfindungsgemäßen Konzepts, nämlich interne Komponenten eines Mikrocontrollers zum Erzeugen eines geeigneten Widerstands, der für die Ansteuerung einer Konstantstromquelle genutzt wird, zu verwenden.

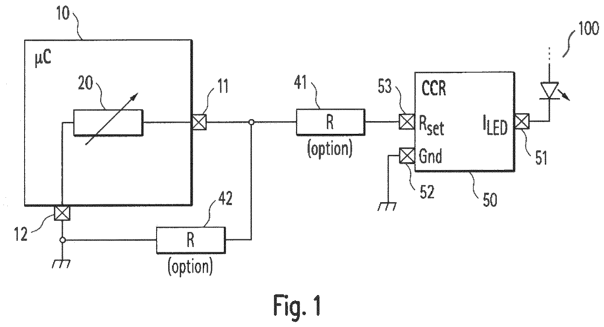

Figur 1 zeigt zunächst in großer Allgemeinheit das erfindungsgemäße Prinzip der stromvariablen Ansteuerung von Leuchtmitteln. Betrieben werden sollen im dargestellten Ausführungsbeispiel Anordnungen von LEDs, die allgemein mit den Bezugszeichen 100 versehen sind. Je nach Art, Anzahl sowie Verschaltung der LEDs untereinander sollten diese im Sinne eines effizienten Betriebs mit einem hierfür geeigneten Strom betrieben werden.

Verantwortlich für den korrekten Strom ist eine ausgangsseitig an die LED-Anordnung 100 angeschlossene steuerbare Konstantstromquelle 50, die einen entsprechenden Anschluss 51 aufweist, der mit der LED-Anordnung 100 verbunden ist. Über einen weiteren Anschluss 52 ist die Konstantstromquelle 50 mit Masse verbunden, wobei dann über die entsprechende Verbindung der durch die LED-Anordnung 100 fließende I_{LED} Strom eingestellt werden kann.

Die Konstantstromquelle 50 ist hierbei derart ausgeführt, dass abhängig von einem an einem dritten Anschluss, dem sogenannten Steueranschluss 53, angeschlossenen Widerstand ein dem Widerstandswert Rₛₑₜ entsprechender Stromfluss durch die LED-Anordnung 100 hervorgerufen wird. Das heißt, die Höhe des Widerstands, der an den Steueranschluss 53 der Konstantstromquelle 50 angeschlossen wird, bestimmt die Höhe des durch die LED-Anordnung 100 fließenden Stroms.

Erfindungsgemäß ist nunmehr vorgesehen, dass ein in der Schaltungsanordnung vorgesehener Mikrocontroller 10 zum Ansteuern der Konstantstromquelle 50 genutzt wird. Dieser weist intern nachfolgend noch näher beschriebene Komponenten auf, über die ein variabler Widerstand erzeugt werden kann. Dieser variable Widerstand 20 ist über einen Ausgangsanschluss 11 mit der steuerbaren Konstantstromquelle 50 verbunden. Über einen zweiten Anschluss 12 des Mikrocontrollers 10 erfolgt dann die Verbindung des Widerstands 20 mit Masse. Aus Sicht der steuerbaren Konstantstromquelle 50 ist also wiederum an den Steueranschluss 53 ein mit Masse verbundener Widerstand angeschlossen, der zum Einstellen des durch die Konstantstromquelle 50 hervorgerufenen Stromflusses genutzt wird.

Dabei weisen steuerbare Konstantstromquellen, wie sie in Figur 1 gezeigt sind, üblicherweise einen bestimmten Bereich für den eingangsseitig anzuschließenden Steuerwiderstand auf. Da dieser nicht zwingend mit dem Bereich des veränderbaren Widerstands 20, der durch den Mikrocontroller 10 erzeugt werden kann, zusammenfällt, können optionale zusätzliche Widerstände genutzt werden, um eine entsprechende Anpassung vorzunehmen.

Ein erster Anpassungswiderstand 41 ist hierbei zwischen Ausgangsanschluss 11 des Mikrocontrollers 10 und Steueranschluss 53 der Konstantstromquelle 50 vorgesehen. Dieser erste Anpassungswiderstand 41 befindet sich also in Serie zu dem internen veränderbaren Widerstand 20 des Mikrocontrollers 10, wodurch eine Verschiebung des insgesamt erzielbaren Widerstandsbereichs bewirkt wird. Ein zweiter Anpassungswiderstand 42 hingegen ist auf der einen Seite an die Verbindung zwischen Ausgangsanschluss 11 des Mikrocontrollers 10 und Steueranschluss 53 der Konstantstromquelle 50 angeschlossen, auf der anderen Seite allerdings auch mit Masse verbunden, wie in Figur 1 gezeigt ist. Dieser zweite Anpassungswiderstand 42 ist also parallel zum internen veränderbaren Widerstand 20 des Mikrocontrollers 10 geschaltet, wodurch der insgesamt erzielbare Widerstandsbereich vergrößert beziehungsweise verkleinert wird. Letztendlich kann also durch geeignete Wahl für die beiden Widerstände 41 und 42 der sich insgesamt aus Sicht der steuerbaren Konstantstromquelle 50 ergebene Widerstandbereich, der mit Hilfe des verstellbaren Widerstands 20 des Mikrocontrollers 10 erzeugt wird, an den Steuerbereich der Konstantstromquelle 50 angepasst werden. Beide Widerstände 41 und 42 müssen einmalig entsprechend gewählt und in der dargestellten Weise in die Schaltungsanordnung integriert werden, sodass dann letztendlich allein durch die Tätigkeit des Mikrocontrollers 10 eine effiziente und schnelle Ansteuerung der Konstantstromquelle 50 erfolgen kann. Das Ansteuern der Konstantstromquelle 50 erfolgt dabei insbesondere jedoch ohne Einsatz der bislang hierfür erforderlichen sogenannten digitalen Potentiometer. Der Aufwand zum Realisieren der Ansteuerung der Konstantstromquelle 50 kann auf diesem Wege also deutlich reduziert werden.

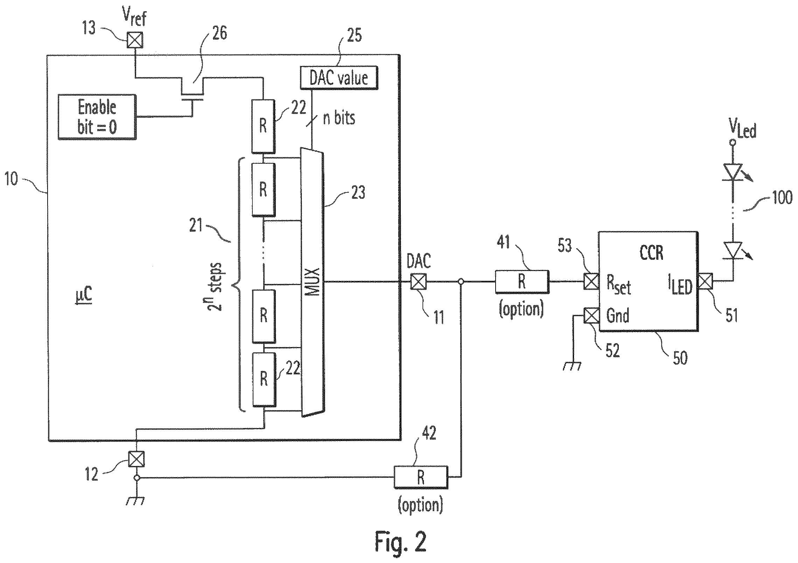

In Figur 2 ist näher ausgeführt, in welcher Weise mit Hilfe des Mikrocontrollers 10 der erfindungsgemäße variable Widerstand 20 erzeugt wird. Gleiche Elemente sind hierbei mit gleichen Bezugszeichen wie in Figur 1 versehen.

Dabei ist erfindungsgemäß vorgesehen, dass interne Komponenten des Mikrocontrollers 10, mit deren Hilfe normalerweise ein analoges Spannungssignal über den Ausgang 11 abgegeben wird, nunmehr zum Erzeugen des veränderbaren Widerstands genutzt werden.

Zentrales Element dieser Komponenten zu Erzeugung des analogen Ausgangssignals sind mehrere Einzelwiderstände 22, die in Serie zu einem internen Spannungsteiler 21 verschaltbar sind. Jeder Verbindungspunkt zwischen den Widerständen 22 ist hierbei mit einem Multiplexer 23 verbunden, wobei der Multiplexer 23 dann in der Lage ist, wahlweise diese Widerstände 22 in beliebiger Kombination in Serie miteinander zu verbinden. Hierbei wird ein variabler Spannungsteiler 21 gebildet, der die üblicherweise über einen Eingangsanschluss 13 des Mikrocontrollers 10 zur Verfügung gestellte Referenzspannung V_{ref} herabsetzt und als analoge Ausgangsspannung über den DAC-Anschluss 11 abgibt. Der Multiplexer 23 verschaltet hierbei die Widerstände 22 abhängig von einem digitalen n-Bit-Signal, das intern durch eine entsprechend Einheit 25 als digitaler Sollwert ausgegeben wird. Ist also die Ausgabe eines gewünschten analogen Ausgangssignals erforderlich, so wird über ein steuerbares Schaltelement 26 der Spannungsteiler 21 mit der Referenzspannung 13 verbunden und der Multiplexer 23 verbindet dann abhängig von dem digitalen Sollwert die Einzelwerte 22 untereinander, sodass letztendlich am Ausgang 11 ein analoges, dem digitalen Sollwert entsprechendes Ausgangssignal abgegeben wird.

Gemäß der vorliegenden Erfindung ist nunmehr vorgesehen, diese Komponenten, die eigentlich zum Erzeugen eines digitalen Ausgangsignals vorgesehen sind, nunmehr zum Realisieren eines variablen Widerstands 20 zu nutzen. Wird nämlich die Verbindung des Spannungsteilers 21 zu der Referenzspannung V_{ref} mit Hilfe des steuerbaren Schaltelements 26 unterbrochen, so ergibt sich abhängig von der Ansteuerung durch den Multiplexer 23 intern eine veränderbare Kombination von in Serie miteinander verbundenen Widerständen 22, die einerseits mit dem Masseanschluss 12 des Mikrocontrollers 10 und andererseits mit dem DAC-Ausgang 11 verbunden sind. Dieser Widersand stellt allerdings dann aus Sicht der steuerbaren Konstantstromquelle 50 - gegebenenfalls in Kombination mit den Anpassungswiderständen 41 und 42 - den am Eingangsanschluss 53 anliegenden Widerstand dar, über den die Höhe des durch die Konstantstromquelle 50 eingestellten Stroms I_{LED} festgelegt wird. Letztendlich kann also durch Unterbrechung der Verbindung mit der Referenzspannung V_{ref} und geeignetes Ansteuern des Multiplexers 23 ein variabler Widerstand erzeugt werden, der dann zur Ansteuerung der Konstantstromquelle 50 genutzt wird. Die Auflösung dieses veränderbaren Widerstands entspricht hierbei der Auflösung des normalerweise erzeugbaren analogen Ausgangsignals. Das heißt, je feiner eine Einstellung des analogen Ausgangssignals durch den Mikrocontroller 10 ermöglicht wird, desto feiner kann auch der zum Ansteuern der Konstantstromquelle 50 genutzte Widerstand 20 verändert werden. Insgesamt wird hierdurch eine äußerst elegante Möglichkeit dafür geschaffen, die steuerbare Konstantstromquelle 50 unmittelbar durch einen variablen Widerstand anzusteuern.

Dabei kann vorgesehen sein, dass das Einstellen des internen Widerstands 20 zum Ansteuern der Konstantstromquelle 50 einmalig abhängig von der zu betreibenden Leuchtmittel-Anordnung 100 erfolgt. Die besonderen Vorteile der erfindungsgemäßen Lösung kommen allerdings insbesondere dann zu Tragen, wenn während des Betriebs der von der Konstantstromquelle 50 einzustellende Strom kontinuierlich angepasst werden soll. Da das Ansteuern des Multiplexes 23 intern in dem Mikrocontroller 10 mit hoher Geschwindigkeit erfolgen kann, ergibt sich auch eine verzögerungslose Ansteuerung der Konstantstromquelle 50, sodass sehr schnell auf sich verändernde Verhältnisse reagiert werden kann. Hierzu kann beispielsweise vorgesehen sein, dass der Mikrocontroller 10 über nicht näher dargestellte weitere Steuermittel die Konfiguration der anzusteuernden Leuchtmittel-Anordnung 100 zeitveränderlich anpasst. Wie beispielsweise bereits erwähnt, kann entsprechend einer aus dem Stand der Technik bekannten Lösung hierzu vorgesehen sein, dass abhängig von einer zur Verfügung gestellten, zum Betreiben der Anordnung 100 verwendeten Versorgungsspannung die Anzahl der miteinander verschalteten LEDs derart modifiziert wird, dass die LEDs jeweils mit einer für sie geeigneten Vorwärtsspannung betrieben werden. Je nach Art der Verschaltung der LEDs ist dann allerdings auch eine entsprechende Anpassung des Stroms durch die steuerbare Konstantstromquelle 50 erforderlich. Werden beide Aufgaben gemeinsam durch den Mikrocontroller 10 erfüllt, ist gewährleistet, dass ohne Zeitverzögerung eine Anpassung des Stroms für die LED-Anordnung an die aktuelle Konfiguration der LED-Anordnung vorgenommen wird.

Letztendlich kann also mit Hilfe der erfindungsgemäßen Lösung nicht nur der Aufwand zum geeigneten Ansteuern einer Leuchtmittel-Anordnung reduziert werden, sondern das Ansteuerverhalten wird gegenüber bekannten Lösungen auch deutlich verbessert.

## Patentansprüche

1. Schaltungsanordnung zum Betreiben von Leuchtmitteln (100), aufweisend eine steuerbare Konstantstromquelle (50), welche abhängig von einem an einen Steueranschluss (53) der Konstantstromquelle (50) angeschlossenen Widerstand einen zum Betreiben der Leuchtmittel (100) vorgesehen Strom (I_{LED}) einstellt,
wobei die Schaltungsanordnung weiterhin einen Mikrocontroller (10) mit Digital-zu-Analog-Funktionalität aufweist und der Steueranschluss (53) der Konstantstromquelle (50) an einen DAC-Anschluss (11) des Mikrocontrollers (10) angeschlossen ist,
**dadurch gekennzeichnet, dass** interne Spannungsteilerkomponenten des Mikrocontrollers (10) einen internen Widerstand (20) bilden, der Bestandteil des zum Steuern der Konstantstromquelle (50) genutzten Widerstands ist.

2. Schaltungsanordnung nach Anspruch 1,
**dadurch gekennzeichnet,**
**dass** zwischen dem DAC-Ausgang (11) des Mikrocontrollers (10) und dem Steuereingang (53) der Konstantstromquelle (50) ein konstanter Widerstand (41) angeordnet ist.

3. Schaltungsanordnung nach Anspruch 1 oder 2,
**dadurch gekennzeichnet,**
**dass** an die Verbindung zwischen DAC-Ausgang (11) und Steuereingang (53) der Konstantstromquelle (50) ein konstanter Widerstand (42) angeschlossen ist, der parallel zu den Spannungsteilerkomponenten des Mikrocontrollers (10), die Bestandteil des zum Steuern der Konstantstromquelle (50) genutzten Widerstands sind, geschaltet ist.

4. Schaltungsanordnung nach einem der vorherigen Ansprüche,
**dadurch gekennzeichnet,**
**dass** der Mikrocontroller (10) eine Anordnung mehrerer Einzelwiderstände (22) sowie einen Multiplexer (23) aufweist, über den die Einzelwiderstände (22) variabel zu einem Spannungsteiler (21) kombinierbar sind, wobei ein Abschnitt des Spannungsteilers (21) den internen Widerstand (20) bildet.

5. Schaltungsanordnung nach Anspruch 4,
**dadurch gekennzeichnet,**
**dass** der Mikrocontroller (10) ein Schaltelement (26) aufweist, über welches die Anordnung der mehreren Einzelwiderstände (22) wahlweise mit einer Referenzspannung (V_{ref}) verbunden oder von dieser getrennt werden kann.

6. Schaltungsanordnung nach einem der vorherigen Ansprüche,
**dadurch gekennzeichnet,**
**dass** der Mikrocontroller (10) dazu ausgebildet ist, während des Betriebs den internen Widerstand (20) variabel anzupassen.

7. Schaltungsanordnung nach Anspruch 6,
**dadurch gekennzeichnet,**
**dass** der der Mikrocontroller (10) dazu ausgebildet ist, die Anpassung des internen Widerstands (20) abhängig von einer aktuellen Konfiguration der zu betreibenden Leuchtmittel (100) und/oder einer den Leuchtmitteln (100) zur Verfügung gestellten Versorgungsspannung vorzunehmen.

8. Schaltungsanordnung nach Anspruch 7,
**dadurch gekennzeichnet,**
**dass** der der Mikrocontroller (10) dazu ausgebildet ist, abhängig von einer den Leuchtmitteln (100) zur Verfügung gestellten Versorgungsspannung die Konfiguration der Leuchtmittel (100) anzupassen.

## Claims

1. Circuit arrangement for operating light sources (100), comprising a controllable constant current source (50) which, depending on a resistance connected to a control terminal (53) of the constant current source (50), has a current (I_{LED}) for operating the light source (100),
wherein the circuit arrangement further comprises a microcontroller (10) with digital-to-analog functionality and the control terminal (53) of the constant current source (50) is connected to a DAC terminal (11) of the microcontroller (10), **characterized in that** internal voltage divider components of the microcontroller (10) form an internal resistance (20), which is part of the resistor used to control the constant current source (50).

2. Circuit arrangement according to claim 1, **characterized in that** a constant resistance (41) is arranged between the DAC output (11) of the microcontroller (10) and the control input (53) of the constant current source (50).

3. Circuit arrangement according to claim 1 or 2, **characterized in that** a constant resistance (42) is connected to the connection between the DAC output (11) and the control input (53) of the constant current source (50), which is connected in parallel with the voltage divider components of the microcontroller (10), which form part of the resistance used to control the constant current source (50).

4. Circuit arrangement according to one of the preceding claims, **characterized in that** the microcontroller (10) comprises an arrangement of a plurality of individual resistances (22) as well as a multiplexer (23) via which the individual resistances (22) may be variably combined with a voltage divider (21), wherein a portion of the voltage divider (21) forms the internal resistance (20).

5. Circuit arrangement according to claim 4, **characterized in that** the microcontroller (10) comprises a switching element (26) via which the arrangement of the plurality of individual resistances (22) may be optionally connected to or isolated from a reference voltage (V_{ref}).

6. Circuit arrangement according to one of the preceding claims, **characterized in that** the microcontroller (10) is designed to variably adapt the internal resistance (20) during operation.

7. Circuit arrangement according to claim 6, **characterized in that** the microcontroller (10) is designed to make the adaptation of the internal resistance (20) dependent on an actual configuration of the light sources (100) to be operated and/or to provide a supply voltage to the light sources (100).

8. Circuit arrangement according to claim 7, **characterized in that** the microcontroller (10) is designed to adapt the configuration of the light sources (100) as a function of a supply voltage provided to the light sources (100).

## Revendications

1. Agencement de circuit destiné à faire fonctionner des moyens d'éclairage (100), comportant une source de courant constant (50) pouvant être commandée qui, en fonction d'une résistance connectée à une connexion de commande (53) de la source de courant constant (50), règle un courant (I_{LED}) prévu pour faire fonctionner les moyens d'éclairage (100),
l'agencement de circuit comportant en outre un microcontrôleur (10) doté d'une fonctionnalité numérique vers analogique, et la connexion de commande (53) de la source de courant constant (50) étant connectée à une connexion DAC (11) du microcontrôleur (10),
**caractérisé en ce que**
des composants de diviseur de tension internes du microcontrôleur (10) forment une résistance (20) interne qui fait partie de la résistance utilisée pour commander la source de courant constant (50).

2. Agencement de circuit selon la revendication 1,
**caractérisé en ce**
**qu'**une résistance (41) constante est disposée entre la sortie DAC (11) du microcontrôleur (10) et l'entrée de commande (53) de la source de courant constant (50).

3. Agencement de circuit selon la revendication 1 ou 2,
**caractérisé en ce**
**qu'**une résistance (42) constante est connectée au raccordement entre la sortie DAC (11) et l'entrée de commande (53) de la source de courant constant (50) et est montée en parallèle avec les composants de diviseur de tension du microcontrôleur (10) qui font partie de la résistance utilisée pour commander la source de courant constant (50).

4. Agencement de circuit selon l'une des revendications précédentes,
**caractérisé en ce que**
le microcontrôleur (10) comporte un agencement de plusieurs résistances individuelles (22) ainsi qu'un multiplexeur (23) par le biais duquel les résistances individuelles (22) peuvent être combinées de façon variable en un diviseur de tension (21), un segment du diviseur de tension (21) formant la résistance (20) interne.

5. Agencement de circuit selon la revendication 4,
**caractérisé en ce que**
le microcontrôleur (10) comporte un élément de commutation (26) par le biais duquel l'agencement des plusieurs résistances individuelles (22) peut au choix être raccordé à une tension de référence (V_{ref}) ou être séparé de celle-ci.

6. Agencement de circuit selon l'une des revendications précédentes,
**caractérisé en ce que**
le microcontrôleur (10) est constitué pour adapter de façon variable la résistance (20) interne pendant le fonctionnement.

7. Agencement de circuit selon la revendication 6,
**caractérisé en ce que**
le microcontrôleur (10) est constitué pour procéder à l'adaptation de la résistance (20) interne en fonction d'une configuration actuelle des moyens d'éclairage (100) à faire fonctionner et/ou d'une tension d'alimentation mise à la disposition des moyens d'éclairage (100).

8. Agencement de circuit selon la revendication 7,
**caractérisé en ce que**
le microcontrôleur (10) est constitué pour adapter la configuration des moyens d'éclairage (100) en fonction d'une tension d'alimentation mise à ladisposition des moyens d'éclairage (100).
